# EUROPEAN PATENT SPECIFICATION

(11) **EP 1 875 640 B1**
(45) Date of publication and mention of the grant of the patent: **21.12.2011**
(21) Application number: 06750130.4
(22) Date of filing: 14.04.2006
(51) Int. Cl.: H04J 3/16, H04N 7/24, H04J 3/06

(54) **SYSTEMS AND METHODS FOR NEXT GENERATION CABLE NETWORK DYNAMIC MULTIPLEXING**
SYSTEME UND VERFAHREN FÜR DYNAMISCHES MULTIPLEXING IN KABELNETZEN DER NÄCHSTEN GENERATION
SYSTEMES ET PROCEDES DE MULTIPLEXAGE DYNAMIQUE DE RESEAU CABLE DE LA PROCHAINE GENERATION

(30) Priority: 18.04.2005 US 672581 P; 31.03.2006 US 278325
(43) Date of publication of application: 09.01.2008
(73) Proprietor: Ericsson Television Inc., Duluth, Georgia 30096 (US)
(72) Inventor: ADDINGTON, Timothy, Roswell, GA 30075 (US)
(74) Representative: Want, Clifford James
(86) International application number: PCT/US2006/014011
(87) International publication number: WO 2006/113404

(56) References cited:
- WO-A1-01/31605
- US-A1- 2001 019 559
- US-A1- 2002 163 937
- US-A1- 2002 163 937
- US-A1- 2003 053 484
- US-A1- 2003 149 975
- US-A1- 2004 190 528
- US-B1- 6 307 839
- US-B1- 6 389 493
- US-B1- 6 728 238

## Description

### FIELD OF THE INVENTION

The present invention generally pertains to cable network technology, particularly to adaptive and dynamic multiplexing techniques for traffic on a cable network.

### BACKGROUND

Cable networks transmit a plurality of video and other type of information streams using a transmission network. These networks were traditionally based on coaxial transmission technology, but more and more such networks are based on fiber optic technology and use SONET or ATM based techniques. The transmission networks originally provided a uni-directional communication medium with video information transmitted from the headend to the set top box, but cable networks are now bi-directional communication networks. However, even with bi-directional networks, most of the information (in terms of utilized and allocated bandwidth) is transmitted from the headend to the set top box in the form of video information streams.

Regardless of the actual transmission facility used, there is a finite amount of bandwidth available on the transmission network components to accommodate the services. Although improvements in technology are increasing the overall amount of information that can be transmitted (e.g., many current cable systems can provide hundreds of video channels), the total amount of bandwidth is limited and the relative amounts of bandwidth allocated for each type of service is fixed - e.g., static.

Cable network operators are also augmenting the services they provide. In addition to basic service, most cable networks provide movies on demand, pay-per-view channels, in addition to high-speed Internet access. Many other types of services are possible, but the bandwidth requirements of all the services must not exceed the capability of the facilities. Further, it is desirable to use the existing facilities in the most efficient manner.

To illustrate the principles of the present invention, four main services are illustrated, although in practice, more exist. These include:
1) Movies on Demand (MOD). This service allows the user to select one from a plurality of movies to view at the present. The user typically signals the network from the set top box, and the network downloads the appropriate information allowing the set top box to decode the information.
2) Broadcast Basic Video. This provides a variety of local or national channels to the user on a continuous basis. No special signaling is required to receive these channels in this embodiment as the channels are continuously made available.
3) Data Services (High Speed Data). This service provided bi-directional, high-speed data transfer, which is typically used by users for browsing the world wide web.
4) Signaling. In order to obtain the MOD, as well as allow the network to administer and manage the other services, signaling must be able to be transferred between the headend and the user's set top box.

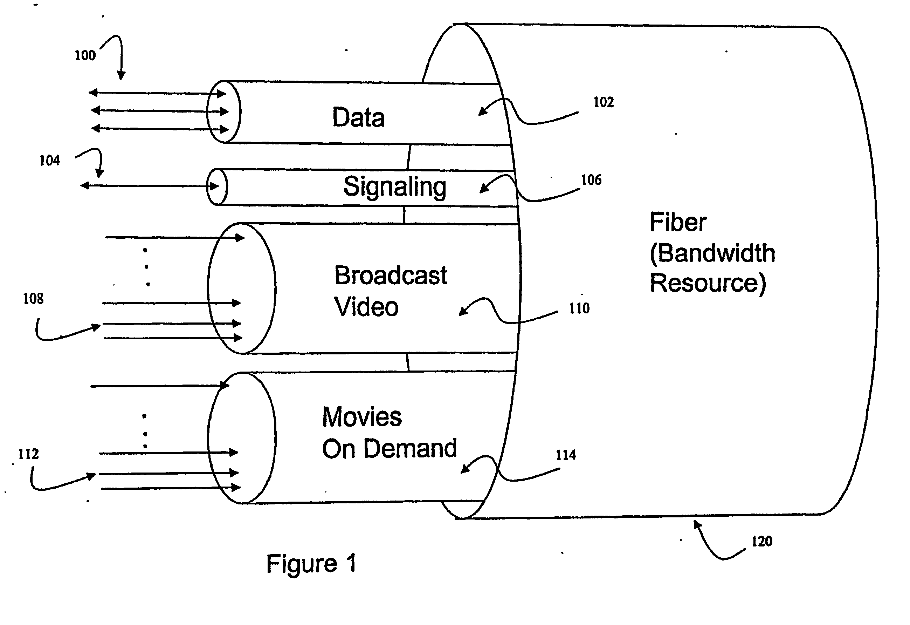

An arrangement for allocating the bandwidth for these services is illustrated at a high level in Figure 1. In Figure 1, the fiber **120** represents the transmission facility, which has a finite bandwidth and is illustrated conceptually by the size of the fiber or "pipe." The fiber must convey a variety of information streams, and these are represented as smaller bandwidth streams or "pipes." For example, the movies on demand service **114** is shown as an aggregate bandwidth **114** over which individual movies **112** are streamed. The operator has allocated a certain aggregate bandwidth for MOD, and thus only a defined number of movies **112** can be streamed over the maximum bandwidth **114** allocated for MOD. While a given user in a household is typically only watching one movie, other subscribers on the network may be doing so. Thus, the total number of users able to simultaneously view a movie on demand is limited by the bandwidth allocated for the service.

Similarly, the cable operator also allocates a certain amount of bandwidth **110** for broadcast video channels **108.** In this case, the bandwidth allocated usually is the same as the number of channels transmitted, as the channels are typically continuously transmitted. However, in certain cases, some channels may be transmitting programs for only limited hours during the day. For example, certain channels may not carry programming in the early morning hours. Alternatively, the channels may be carrying "filler" programs (e.g., "infomercials") because the channel bandwidth cannot be used for other purposes. However, generally speaking, the bandwidth allocated for broadcast basic video correlates with the maximum number of channels, which is typically the same number of channels being broadcasted at any given time.

The bandwidth allocated for signaling **106** is typically smaller in comparison to the previously mentioned services, as the traffic requirements for signaling traffic **104** are less. The signaling channel allocation depends in part on the other types of service allocated. In this simple example, if no movies on demand were offered, the signaling channel **106** would be allocated a smaller bandwidth.

Finally, a certain amount of bandwidth **102** is allocated for high speed data traffic **100.** Such traffic is typically representative of users browsing the worldwide-web , which represents bi-directional traffic.

The image of Figure 1 is a simplified illustration of the relative sizes of bandwidth allocated for various services on a cable transmission network and how they are used to convey specific instances of traffic. The current practice statically defines the allocated bandwidth for each service grouping based on best estimates of usage, traffic patterns and volumes, and profitability. One factor included considered include the allocated number of maximum channels that are distributed (whether based on analog or digital transmission). The remaining bandwidth is then divided with a portion allocated to MOD. Typically, the bandwidth allows a maximum number of requests to be handled. Next, a portion of the bandwidth, albeit small, is allocated for signaling applications. Then, whatever bandwidth is left over may be allocated for Internet (data) based traffic.

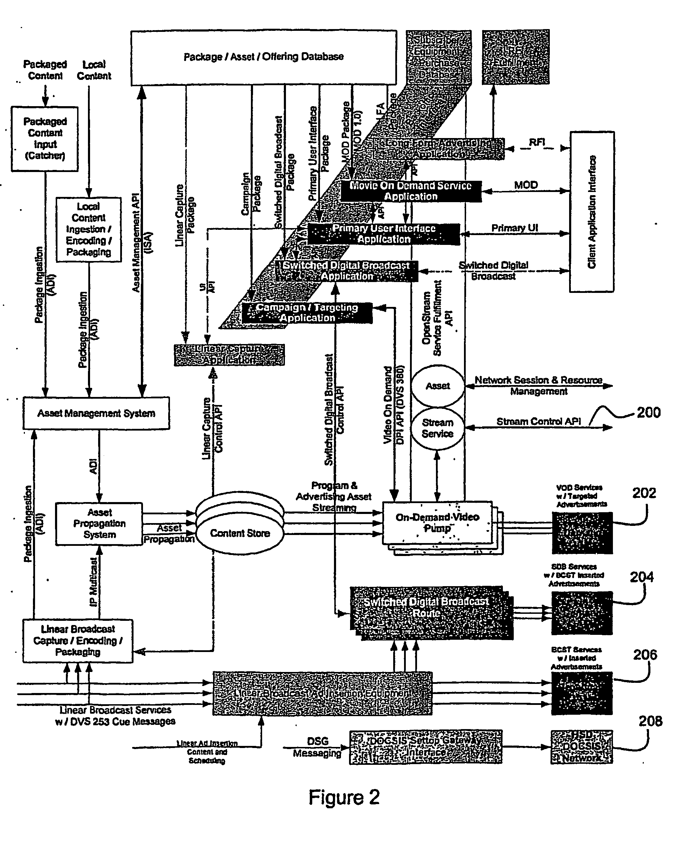

The network architecture to accommodate this fixed allocation of bandwidth resources is shown in Figure 2, depicting the VOD QAM equipment 200, the Switched Video Broadcasts 202, the Broadcast Channels, High Speed Data traffic 206, and Signaling Data 208. Each of this is allocated a fixed amount of bandwidth on a static basis corresponding to each of the "pipes" of Figure 1.

Document WO 01/31605 discloses a system and method for optimizing bandwidth efficiencies in the distribution of digital video, digital audio and data over a cable television system.

Document US2004/190528 discloses a system, apparatus, and method for dynamically allocating bandwidth to applications in a network based on utility functions.

Document US 6,307,839 discloses a dynamic bandwidth allocation system that is used to optimize the transmission of traffic on the twisted pair connecting the customer premises equipment with the local office.

Document US2002/163937 discloses a digital transmission device for dynamically allocating bandwidth comprising a plurality of peripheral cards that require different amounts of system bandwidth, and an allocation module. The allocation module is connected to the plurality of peripheral cards by transmission channels and assigns incremental bandwidths to the cards based upon the size of the cards' payload to be transmitted.

### SUMMARY

There is provided a multiplexing apparatus in a cable distribution network as set out in claim 1, and a method for multiplexing traffic at a traffic multiplexer in a cable distribution system as set out in claim 8.

### BRIEF DESCRIPTION OF THE DRAWINGS

Figure 1 discloses a prior art method of bandwidth allocation for types of traffic in a cable distribution network.
Figure 2 discloses a prior art method of a network architecture for providing multiple services in a cable network.
Figure 3 discloses one embodiment according to the present invention of dynamically allocating bandwidth traffic types in a cable network.
Figure 4 discloses one embodiment according to the present invention of a network architecture for providing dynamic bandwidth allocation in a cable network

### DETAILED DESCRIPTION

Static allocation of bandwidth for different types of services is the current practice for allocating bandwidth on a cable network. This requires the operator to define the bandwidth allocation, and periodically review the allocation with respect to services and usage. Typically, the cable operator has various sub-networks, and the bandwidth for each must be periodically reviewed and reallocated similarly. If a new service is to be offered, a certain amount of bandwidth must be allocated to it and the cable provider must either allocate unused bandwidth, or more likely, reallocate the bandwidth among existing service types. Obviously, matching the available resource (bandwidth) to the needs for the resources (services) is time consuming, error prone, and subject to estimation. While having a surplus of bandwidth to allocate facilitates the allocation process and provides a 'cushion' against errors, maintaining a surplus of bandwidth is inefficient, and represents unrealized revenue potential. Further, a surplus of bandwidth cannot be presumed to always exist. If sufficient additional bandwidth is available, then adding the new service is possible without altering existing allocations and reallocation is not necessary.

However, with the increasing number of channels, the increase in new features, the available bandwidth for adding new services is limited. Given that many new service opportunities exist and cable operators desire to add these to their cable network, a more flexible bandwidth allocation scheme is needed for managing new and existing services.

The fundamental scheme currently in practice is illustrated in Figures 1 and 2. In Figure 1 illustrates one allocation that a cable operator may make for resource allocation for different services. In Figure 1, the fiber **120** represents finite bandwidth allocated to accommodate the services for all times. The services disclosed are exemplary, as there may be more of less. Figure 1 represents a fixed bandwidth for high speed data **102,** which may include a number of active connections, such as TCP/IP connections **100.** Similarly, there is a fixed bandwidth allocated for broadcast video **110,** which comprises a number of channels **108.** Similarly, there is a signaling channel **106** conveying signaling information **104** between the hosts and the network. Finally, there is a finite bandwidth allocated for movies on demand **114** that can handle a maximum of a certain number of movies **112.**

Currently, the allocation of bandwidth is static, and the associated architecture is shown in Figure 2. In Figure 2, each of the bandwidths is allocated and must convey the required traffic. For example, in Figure 2, the High Speed DOCSIS network traffic 208 is allocated a bandwidth **102** of Figure 1 that conveys all the high speed data traffic **100** of Figure 1. The bandwidth allocated is sized based on the current/projected subscriber basis. Similarly, the Stream Control **200** of Figure 2 represents signaling traffic between the hosts and the cable network, and it corresponds to the signaling traffic **104** shown in Figure 1 conveying aggregate signaling traffice **104.** Similarly, there is a static amount of bandwidth allocated to broadcast traffic **206,** switch digital video **204,** and video on demand traffic **202.** (Note all of these have a corresponding bandwidth shown on Figure 1). Figure 2 illustrates that the equipment used to multiplex the traffic is allocated a bandwidth that is independent from other traffic. Further, each of the QAMs in Figure 2 may manage its bandwidth, for example to accommodate insertion of advertising information. Again, the allocation of traffic within a QAM is not coordinated in real time with that of the others.

As expected, the service mix, and thus the allocated bandwidth, may vary over the course of the day, or the day of the week. For example, a cable operator may find the demand for MOD increases significantly on weekend nights, or based on the popularity of the movies being offered. Similarly, the data traffic (e.g. Internet) may increase during the week, but drop off during weekends.

In addition to a time based metric, the demographics of the serving area may impact the service mix relative to other serving areas. Certain areas may see a larger percentage of data traffic, and a lower demand for broadcast video. Other areas may not see a large demand for movies on demand. Areas with large number of families with school age children may use the Internet for school work during the week after school, whereas other areas having fewer such families may not have the same demand. Thus, a cable network operator may desire to alter the allocation of bandwidth resources based on a specific geographical area. For example, one portion of a serving area may have one type of traffic allocation whereas serving area may have a different traffic allocation scheme. The allocation of bandwidth to various services types requires periodic adjustments.

While traffic allocation may be done manually by the cable operator based on changing subscriber demographics or growth factors, the readjustment is error prone. If too much traffic is allocated to high speed data unnecessary, users may be adversely impacted when selecting video on demand services at certain times. For optimal efficiency, the re-allocations should be done in real time, but this is not manually possible.

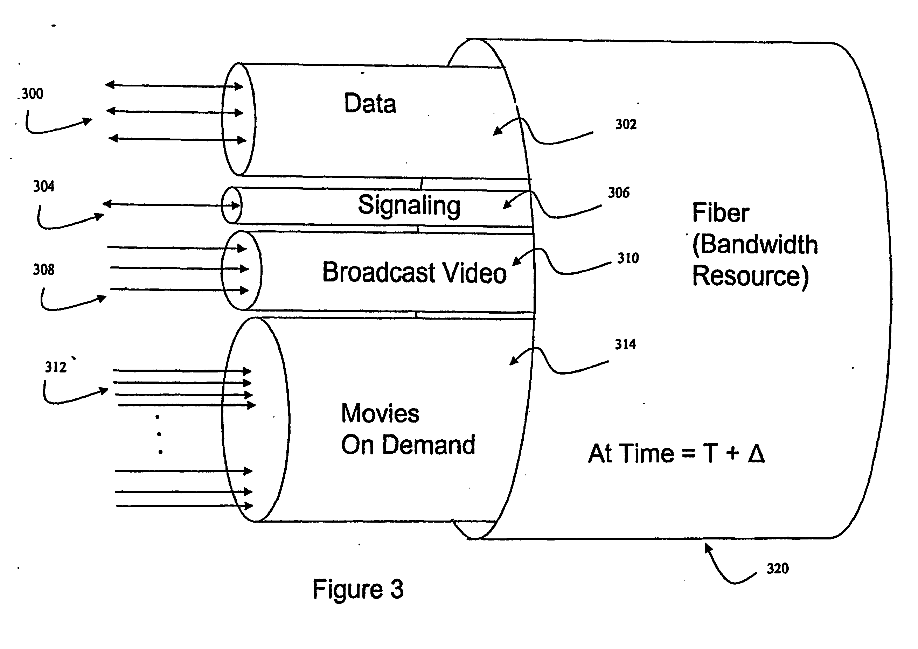

The concept of dynamic allocation of bandwidth is shown in Figure 3. In Figure 3, the relative bandwidths allocated for the services is different compared to Figure 1. Further, the relative bandwidths allocated for the service may vary over time. Thus, Figure 3 illustrates the bandwidth allocation of the same cable network at a time = T + Δ. The reason for the difference in allocated bandwidth is that in some servicing areas, there may be a greater than expected demand for movies on demand (MOD), and thus the bandwidth allocated **314** for MOD is greater, in order to accommodate the increased number of simultaneous movies **312.** Similarly, there may be a need for fewer broadcast video channels **308.** The number required may vary based on the time of day, or based on the particular market which the cable network is serving. The signaling bandwidth **306** is illustrated as the same, while the bandwidth allocated **302** for data is larger, based on the increased number of Internet based connections **300.**

The ability to intelligently and dynamically control the various information streams (whether video or otherwise) being transmitted from the headend over the cable network impacts the operation of the equipment in the network. The equipment must be able to receive or provide information regarding bandwidth resources required or consumed. In order to provide the flexibility and greater efficiency, the cable network must now be able to provide the information streams using a dynamically allocated bandwidth scheme.

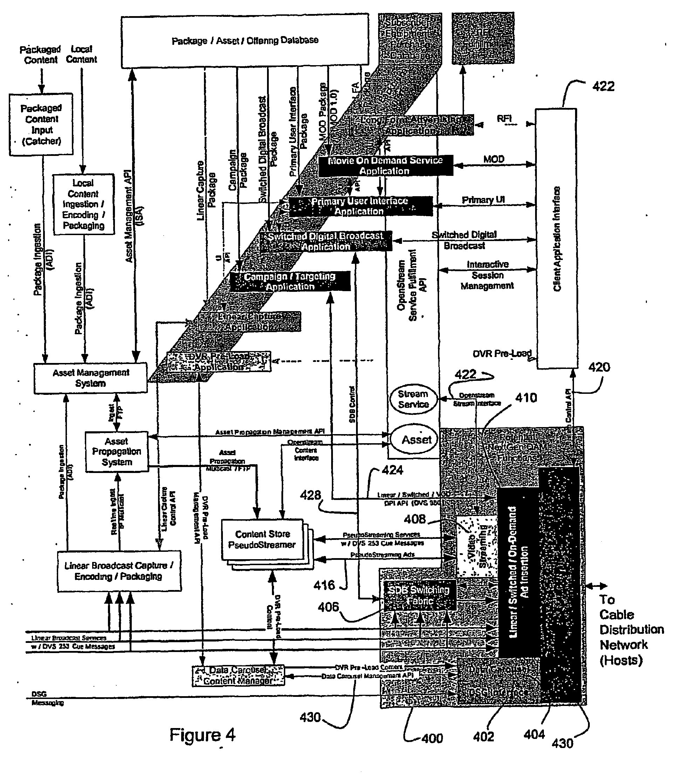

This is accomplished by using an intelligent multiplexer, (a.k.a. a "Next Generation QAM or "NexGen QAM") **400** shown in Figure 4. The NexGen QAM is able to receive information regarding required bandwidth, and dynamically adjust the allocation of bandwidth for services as appropriate. Further, by placing the intelligent QAM multiplexer at the edge of the network, the allocation of traffic to the needs of the hosts connected to the network can be better accommodated for the distribution network. Further, by multiplexing the different types of traffic closer to the edge of the network, the various disparate network components handling each of the traffic types are isolated to a greater extent from the aggregate traffic. In essence, multiplexing the differing streams at the edge of the network frees up to a degree, the traffic allocation of the traffic types prior to the multiplexing. It also provides a single point of coordination of bandwidth allocation between the different traffic types.

In Figure 4, the NexGen QAM **400** receives two types of traffic. First, it receives the traffic to be multiplexed to the hosts. Second, it receives signaling information about the traffic to be sent to the host. By receiving signaling information about each traffic type, NexGen QAM **400** is able to know how to allocate traffic, based on current request and current traffic allocations. Thus, the NexGen QAM **400** receives information about establishment request of DOCSIS HSD as well as the data itself. Consequently, the NexGen QAM **400** is shown as encompassing the Settop Gateway (DSG) interface 402 conveying high speed data between the user's and the Internet (not shown). The high speed data is typically bi-directional, and its bandwidth requirements is directly related to the number of subscribers able to access HSD services.

The NexGen QAM also multiplexes signaling data that is carouseled to the hosts. The data carousel **404** handles the distribution of software updates and download commands to hosts as necessary. Typically, the volume required for this traffic type is not that large. In some embodiments, this allocation may be static, however, if a large number of downloads are necessary, there may be motivation to adjust the bandwidth allocated. Of course, dynamic allocation of bandwidth by the NexGen QAM 400 requires signaling protocols to the host to inform them of the reallocations as necessary.

The NexGen QAM also incorporates multiplexing of Switched Digital Broadcasting channels 406, which represent video streams. The bandwidth allocated is directly proportional to the number of video streams conveyed. Similarly, video streams are received by the Video Streaming component **408** and conveyed to the NexGen QAM. The video streams and switched digital channels may have advertisements dynamically inserted, so that the QAM has a component **410** for receiving ad insertion traffic. The NexGen QAM **400** not only receives the ad traffic **416,** but the signaling information as to how and when the traffic is to be inserted.

As indicated, the NexGen QAM is required to know about which traffic types are required to be transported, as well as their characteristics. Consequently, the NexGen QAM receives inputs about the traffic. For example, inputs **420** are received from the Client Application Interface **422** regarding requested user services. This provides information to the NexGen QAM about anticipated user bandwidth requirements (e.g., including ensuring that bandwidth is allocated for movies being requested by users for viewing). In addition, the NexGen QAM receives other information, such as information regarding other video streams **422,** switched digital control messages **428,** carousel data **430,** etc.

The NexGen QAM monitors data inputs impacting the relative allocation of the information streams with respect to the bandwidth resources being managed. Thus, NexGen QAM receives inputs comprising the status of the current services being requested by users, the current services being provided, as well as accessing various rules defined by the cable operator governing the allocation of services to resources. For example, even if a large number of users request a movie at a particular time, there may be a maximum number that may be allowed based on various rules so as to provide a guaranteed minimum service level. Specifically, the operator may desire to reserve certain bandwidth levels for high speed data usage, so that even if bandwidth or resources are available for additional movies, the number of movies would still be limited.

The inputs of the various traffic types are provided to the Transport Stream Processor (also called the Transport Stream Multiplexer or TSM) 430 which is a sub-component of the NexGen QAM. The TSM is the `gatekeeper' for determining which streams are presented to users. The TSM selectively allocates each of the inputs to the allocated bandwidth and grooms the input streams for transport. The TSM may also re-code and/or encrypt the data prior to transmission.

Although Figure 4 discloses various resources as included in the NexGen QAM, other embodiments may selectively separate some of the components. Thus, in certain embodiments, only NexGen QAM 400 may comprise only the TSM. However, the other components would still be tightly coupled with the TSM. There is an advantage to incorporating some of the components with the TSM, such as the switching fabric, video streaming, data carousel, etc. This allows faster and closer coordination of the traffic types between the TSM and the resource.

The TSM also logically serves as the point in which ad streams are inserted into transmissions. By placing the insertion of ad information as close as possible to the transmission stream, the ads can be tailored for the local market. Ad insertions may be inserted using a variety of techniques and inserted into a variety of the input streams.

Similarly, the TSM may receive data corresponding to Video on Demand (or Movies on Demand), and can further provide local buffering of the data. By allowing the TSM to 'pull' data from a source and buffer it, the video source is no longer required to provide a tightly synchronized data stream. Rather, this functionality is provided by the TSM when traffic is multiplexed onto the cable network. This approach reduces, to an extent, the need for a highly synchronized collection of devices, and focuses the synchronization functionality in the TSM.

Finally, the TSM is the logical point to also groom and insert switched digital broadcasting, local channels, etc. The TSM may also receive streams, buffer and convert (transcode) the video data as necessary.

The incorporation of the TSM allows the other network elements to provide data as non-streamed data, and localize the functions of grooming the final aggregate information stream at the edge of the network. By doing so, greater flexibility is afforded as to how the sources can be combined in an area to form the final aggregate information stream. This provides greater control and flexibility to cable operators as well.

The TSM typically maintains a database, or other memory store, with an indication of the maximum bandwidth available, as well as available bandwidth currently allocated for different types of services. Upon receiving a service request or other information regarding a traffic type, the TSM ascertains the available capacity currently allocated, and determines whether additional bandwidth is to be allocated to a service type, and whether it is available. The appropriate modifications to the maximum bandwidth available are made, as well as to any other allocations of bandwidth to service types. In addition, to ascertain the associated bandwidth for the request, the TSM may consult various rules indicating limits for traffic types, or access historical trends, including those based on time-of-day, day-of-week, to determine how bandwidth is to be allocated. Thus, minimum or maximum bandwidth thresholds may be defined so that limits may not be exceeded. For example, the NexGen QAM **400** may police the allocated bandwidth so that regarding of the demand for video-on-demand movies, a minimum allocated of bandwidth must be reserved for high speed data users. In such cases, the NexGen QAM may generating a signaling indication (to the appropriate traffic source) that the request cannot be accommodated.

## Claims

1. A multiplexing apparatus in a cable distribution network comprising:
a first traffic interface to a high speed DOCSIS-based component capable of receiving a first traffic data comprising high speed data traffic for transmission on the cable distribution network;
a first traffic signalling interface capable of receiving a first bandwidth indicator associated with the high speed data traffic;
a second traffic interface to a switched digital broadcast component capable of receiving a second traffic data comprising switched digital broadcast traffic for transmission on the cable distribution network;
a second traffic signalling interface capable of receiving a second bandwidth indicator associated with the switched digital broadcast traffic;
a third traffic interface to a video-on-demand component capable of receiving a third traffic data comprising video-on-demand traffic for transmission on the cable distribution network;
a third traffic signalling interface capable of receiving a third bandwidth indicator associated with the video-on-demand traffic; and
a traffic multiplexer capable of receiving the high speed data traffic, the switched digital broadcast traffic, and the video-on-demand traffic, and capable of generating a multiplexed traffic stream, the traffic multiplexer further capable of re-allocating an available bandwidth for one of the high speed data traffic, the switch digital broadcast traffic, and the video-on-demand traffic in response to receiving one of the group of the first traffic bandwidth indicator, the second traffic bandwidth indicator, and the third traffic bandwidth indicator, wherein the re-allocation of bandwidth takes into account a total bandwidth level available for the multiplexed stream on a distribution facility of the cable distribution network;
**characterised in that** the multiplexing apparatus is located at an edge of the cable network, and the multiplexing apparatus further comprises:
an input adapted to receive advertisement traffic and associated advertisement control information; and
an ad insertion component adapted to insert the received advertisement traffic into the switched digital broadcast traffic or video-on-demand traffic according to the associated advertisement control information.

2. The apparatus of claim 1 further comprising a database of rules used by the traffic multiplexer to determine the re-allocation of bandwidth involving at least one of the group of the first traffic data, the second traffic data, and the third traffic data.

3. The apparatus of claim 1 further comprising a fourth interface to a client application interface, capable of receiving an indication of a request by a user on the cable distribution network.

4. The apparatus of claim 3 wherein the traffic multiplexer further re-allocates bandwidth to at least one of the group comprising a first traffic data, the second traffic data, and the third traffic data in response to receiving the indication of the request.

5. The apparatus of claim 1 further comprising a buffer, the buffer storing at least one of the first traffic data, the second traffic data, or the third traffic data to facilitate synchronization of the multiplexed traffic stream.

6. The apparatus of claim 1 wherein the traffic multiplexer transcodes the switched digital broadcast traffic.

7. The apparatus of claim 1 where after re-allocation of the bandwidth, the traffic multiplexer informs a host on the cable distribution network of how to access one of the traffic types.

8. A method for multiplexing traffic at a traffic multiplexer in a cable distribution system comprising:
receiving switched broadcast traffic at the traffic multiplexer associated with a first bandwidth level;
receiving high speed data traffic at the traffic multiplexer associated with a second bandwidth level;
receiving video-on-demand traffic at the traffic multiplexer associated with a third bandwidth level;
multiplexing the switched digital broadcast traffic, the high speed data traffic, and the video-on-demand traffic at the traffic multiplexer to form multiplexed traffic for transmission on a cable distribution network;
receiving an indication of a requested increase in bandwidth associated from one of the group of switched broadcast traffic, the high speed data traffic, and video-on-demand traffic;
re-allocating the at least one of the bandwidth levels associated with first bandwidth level, the second bandwidth level, and the third bandwidth level respectively associated with the increase in bandwidth; and
multiplexing the switched digital broadcast traffic, the high speed data traffic, and the video-on-demand traffic at the traffic in accordance with the re- allocated bandwidth levels;
**characterised in that** the method is operated at an edge of the cable network, and the method further comprises:
receiving advertisement traffic and associated advertisement control information; and
inserting the received advertisement traffic into the switched digital broadcast traffic or video-on-demand traffic according to the associated advertisement control information.

9. The method of claim 8 wherein traffic allocated for the high speed data is greater than a minimum threshold level.

10. The method of claim 8 wherein the indication of a requested increase in bandwidth is based on analyzing signalling requests from hosts attached to the cable network.

11. The method of claim 8 further comprising the step of accessing a rules database to determine whether a proposed increase in bandwidth to one of the group of the first bandwidth level, the second bandwidth level, and the third bandwidth level exceeds a defined level.

12. The method of claim 8 further comprising the step of: transmitting signalling information to at least one host on the network to provide an indication of a reallocation of bandwidth for a type of traffic.

13. The method of claim 8 further comprising the step of: updating a bandwidth allocation table maintained in a memory in the traffic multiplexer.

14. A computer readable medium comprising software for execution all of the steps of the method as claimed in any of claims 8 to 13 when executed on a computer.

## Patentansprüche

1. Multiplexvorrichtung in einem Kabelnetz, wobei die Vorrichtung folgendes umfasst:
eine erste Verkehrsschnittstelle zu einer Hochgeschwindigkeitskomponente auf DOCSIS-Basis, die erste Verkehrsdaten empfangen kann, welche Hochgeschwindigkeits-Datenververkehr zur Übermittlung in dem Kabelnetz umfassen;
eine erste Verkehrssignalisierungsschnittstelle, die einen ersten Bandbreitenindikator empfangen kann, der dem Hochgeschwindigkeits-Datenverkehr zugeordnet ist;
eine zweite Verkehrsschnittstelle zu einer Switched Digital Broadcast-Komponente, die zweite Verkehrsdaten empfangen kann, welche Switched Digital Broadcast-Verkehr zur Übermittlung in dem Kabelnetz umfassen;
eine zweite Verkehrssignalisierungsschnittstelle, die einen zweiten Bandbreitenindikator empfangen kann, der dem Switched Digital Broadcast-Verkehr zugeordnet ist;
eine dritte Verkehrsschnittstelle zu einer Video-on-Demand-Komponente, die dritte Verkehrsdaten empfangen kann, welche Video-on-Demand-Verkehr zur Übermittlung in dem Kabelnetz umfassen;
eine dritte Verkehrssignalisierungsschnittstelle, die einen dritten Bandbreitenindikator empfangen kann, der dem Video-on-Demand-Verkehr zugeordnet ist; und
einen Verkehrsmultiplexer, der den Hochgeschwindikeits-Datenverkehr, den Switched Digital Broadcast-Verkehr und den Video-on-Demand-Verkehr empfangen kann, und der einen multiplexierten Verkehrsstrom erzeugen kann, wobei der Verkehrsmultiplexer eine verfügbare Bandbreite neu zu ordnen kann für den Hochgeschwindigkeits-Datenverkehr, den Switched Digital Broadcast-Verkehr oder den Video-on-Demand-Verkehr, als Reaktion auf den Empfang eines Indikators aus der Gruppe des ersten Verkehrsbandbreitenindikators, des zweiten Verkehrsbandbreitenindikators und des dritten Verkehrsbandbreitenindikators, wobei die neue Zuordnung der Bandbreite eine für den multiplexierten Strom an einer Verteilungseinrichtung des Kabelnetzes zur Verfügung stehende Gesamtbandbreite berücksichtigt;
**dadurch gekennzeichnet, dass** die Multiplexvorrichtung an einem Rand des Kabelnetzes angeordnet ist, und wobei die Multiplexvorrichtung ferner folgendes umfasst:
einen Eingang, der Werbungsverkehr und zugeordnete Werbesteuerungsinformationen empfangen kann; und
eine Werbungseinfügungskomponente, welche den empfangenen Werbungsverkehr in den Switched Digital Broadcast-Verkehr oder den Video-on-Demand-Verkehr gemäß den zugeordneten Werbungssteuerungsinformationen einfügen kann.

2. Vorrichtung nach Anspruch 1, wobei diese ferner eine Datenbank mit Regeln umfasst, die von dem Verkehrsmultiplexer eingesetzt werden, um die neue Zuordnung der Bandbreite zu bestimmen, unter Einbeziehung mindestens einer der Daten der folgenden Gruppe: der ersten Verkehrsdaten, der zweiten Verkehrsdaten und der dritten Verkehrsdaten.

3. Vorrichtung nach Anspruch 1, wobei diese ferner eine vierte Schnittstelle zu einer Client-Anwendungsschnittstelle umfasst, die eine Anzeige einer Anforderung durch einen Benutzer in dem Kabelnetz empfangen kann.

4. Vorrichtung nach Anspruch 3, wobei der Verkehrsmultiplexer ferner die Bandbreite an mindestens eine der Daten der folgenden Gruppe neu zuordnet: der ersten Verkehrsdaten, der zweiten Verkehrsdaten und der dritten Verkehrsdaten, als Reaktion auf den Empfang der Anforderungsanzeige.

5. Vorrichtung nach Anspruch 1, wobei diese ferner einen Puffer umfasst, wobei der Puffer mindestens eine der ersten Verkehrsdaten, der zweiten Verkehrsdaten oder der dritten Verkehrsdaten speichert, um die Synchronisierung des multiplexierten Verkehrsstroms zu erleichtern.

6. Vorrichtung nach Anspruch 1, wobei der Verkehrsmultiplexer den Switched Digital Broadcast-Verkehr umschlüsselt.

7. Vorrichtung nach Anspruch 1, wobei nach der neuen Zuordnung der Bandbreite der Verkehrsmultiplexer einen Host in dem Kabelnetz darüber informiert, wie auf eine der Verkehrsarten zugegriffen werden kann.

8. Verfahren zum Multiplexieren von Verkehr an einem Verkehrsmultiplexer in einem Kabelverteilungssystem, wobei das Verfahren folgendes umfasst:
das Empfangen von Switched Broadcast-Verkehr an dem Verkehrsmultiplexer, der einem ersten Bandbreitenwert zugeordnet ist;
das Empfangen von Hochgeschwindigkeits-Datenverkehr an dem Verkehrsmultiplexer, der einem zweiten Bandbreitenwert zugeordnet ist;
das Empfangen von Video-on-Demand-Verkehr an Verkehrsmultiplexer, der einem dritten Bandbreitenwert zugeordnet ist;
das Multiplexieren des Switched Digital Broadcast-Verkehrs, des Hochgeschwindigkeits-Datenverkehrs und des Video-on-Demand-Verkehrs an dem Verkehrsmultiplexer, so dass multiplexierter Verkehr zur Übermittlung in einem Kabelnetz gebildet wird;
das Empfangen einer Anzeige einer angeforderten zugeordneten Bandbreitenerhöhung von einem Verkehr der folgenden Gruppe: des Switched Broadcast-Verkehrs, des Hochgeschwindigkeits-Datenverkehrs und des Video-on-Demand-Verkehrs;
das neue Zuordnen des mindestens einen der Bandbreitenwerte, die dem ersten Bandbreitenwert, dem zweiten Bandbreitenwert und dem dritten Bandbreitenwert zugeordnet sind, mit entsprechender Zuordnung zu der Erhöhung der Bandbreite; und
das Multiplexieren des Switched Digital Broadcast-Verkehrs, des Hochgeschwindigkeits-Datenverkehrs und des Video-on-Demand-Verkehrs auf dem Verkehr gemäß den neu zugeordneten Bandbreitenwerten;
**dadurch gekennzeichnet, dass** das Verfahren an einem Rand des Kabelnetzes betrieben wird, und wobei das Verfahren ferner folgendes umfasst:
das Empfangen von Werbungsverkehr und zugeordneten WerbungsSteuerungsinformationen; und
das Einfügen des empfangenen Werbungsverkehrs in den Switched Digital Broadcast-Verkehr oder den Video-on-Demand-Verkehr gemäß den zugeordneten Werbungssteuerungsinformationen.

9. Verfahren nach Anspruch 8, wobei der für die Hochgeschwindigkeitsdaten zugeordnete Verkehr größer ist als ein Mindestgrenzwert.

10. Verfahren nach Anspruch 8, wobei die Anzeige für eine angeforderte Bandbreitenerhöhung auf der Analyse der Signalisierungsanforderungen von mit dem Kabelnetz verbundenen Hosts basiert.

11. Verfahren nach Anspruch 8, wobei dieses ferner den Schritt des Zugreifens auf eine Regeldatenbank umfasst, um zu bestimmen, ob eine vorgeschlagene Bandbreitenerhöhung auf einen Wert der Gruppe aus dem ersten Bandbreitenwert, dem zweiten Bandbreitenwert u'd dem dritten Bandbreitenwert einen vorbestimmten Wert überschreitet.

12. Verfahren nach Anspruch 8, wobei dieses ferner den folgenden Schritt umfasst: das Übermitteln von Signalisierungsinformationen an mindestens einen Host in dem Netz, um eine Anzeige einer neuen Zuordnung der Bandbreite für eine bestimmte Verkehrsart bereitzustellen.

13. Verfahren nach Anspruch 8, wobei dieses ferner den folgenden Schritt umfasst: das Aktualisieren einer Bandbreitenzuordnungstabelle in einem Speicher in dem Verkehrsmultiplexer.

14. Computerlesbares Medium, das Software zur Ausführung aller Schritte des Verfahrens nach einem der Ansprüche 8 bis 13 umfasst, wenn dieses auf einem Computer ausgeführt wird.

## Revendications

1. Appareil de multiplexage dans un réseau de distribution câblé comprenant :
une première interface de trafic vers un composant basé DOCSIS à grande vitesse capable de recevoir des premières données de trafic comprenant un trafic de données à grande vitesse à des fins de transmission sur le réseau de distribution câblé ;
une première interface de signalisation de trafic capable de recevoir un premier indicateur de bande passante associé au trafic de données à grande vitesse ;
une deuxième interface de trafic vers un composant de diffusion numérique commutée capable de recevoir des deuxièmes données de trafic comprenant un trafic de diffusion numérique commutée à des fins de transmission sur le réseau de distribution câblé ;
une deuxième interface de signalisation de trafic capable de recevoir un deuxième indicateur de bande passante associé au trafic de diffusion numérique commutée ;
une troisième interface de trafic vers un composant de vidéo à la demande capable de recevoir des troisièmes données de trafic comprenant un trafic de vidéo à la demande à des fins de transmission sur le réseau de distribution câblé ;
une troisième interface de signalisation de trafic capable de recevoir un troisième indicateur de bande passante associé au trafic de vidéo à la demande ; et
un multiplexeur de trafic capable de recevoir le trafic de données à grande vitesse, le trafic de diffusion numérique commutée et le trafic de vidéo à la demande, et capable de générer un courant de trafic multiplexé, le multiplexeur de trafic étant en outre capable de réaffecter une bande passante disponible à l'un du trafic de données à grande vitesse, du trafic de diffusion numérique commutée et du trafic de vidéo à la demande en réponse à la réception de l'un du groupe constitué du premier indicateur de bande passante de trafic, du deuxième indicateur de bande passante de trafic et du troisième indicateur de bande passante de trafic, dans lequel la réaffectation de bande passante prend en compte un niveau de bande passante total disponible pour le courant multiplexé sur un moyen de distribution du réseau de distribution câblé ;
**caractérisé en ce que** l'appareil de multiplexage est situé à un bord du réseau câblé, et l'appareil de multiplexage comprend en outre :
une entrée adaptée pour recevoir un trafic de publicité et des informations de contrôle de publicité associées ; et
un composant d'insertion de publicité adapté pour insérer le trafic de publicité reçu dans le trafic de diffusion numérique commutée ou le trafic de vidéo à la demande selon les informations de contrôle de publicité associées.

2. Appareil selon la revendication 1, comprenant en outre une base de données de règles utilisée par le multiplexeur de trafic pour déterminer la réaffectation de la bande passante impliquant au moins l'un du groupe constitué par les premières données de trafic, les deuxièmes données de trafic et les troisièmes données de trafic.

3. Appareil selon la revendication 1, comprenant en outre une quatrième interface vers une interface d'application client, capable de recevoir une indication d'une demande par un utilisateur sur le réseau de distribution câblé.

4. Appareil selon la revendication 3, dans lequel le multiplexeur de trafic réaffecte en outre la bande passante à au moins l'un du groupe constitué des premières données de trafic, des deuxièmes données de trafic et des troisièmes données de trafic en réponse à la réception de l'indication de la demande.

5. Appareil selon la revendication 1, comprenant en outre un tampon, le tampon stockant au moins l'une des premières données de trafic, des deuxièmes données de trafic ou des troisièmes données de trafic pour faciliter la synchronisation du courant de trafic multiplexé.

6. Appareil selon la revendication 1, dans lequel le multiplexeur de trafic transcode le trafic de diffusion numérique commutée.

7. Appareil selon la revendication 1, dans lequel après la réaffectation de la bande passante, le multiplexeur de trafic informe un hôte sur le réseau de distribution câblé de comment accéder à l'un des types de trafic.

8. Procédé pour multiplexer le trafic au niveau d'un multiplexeur de trafic dans un système de distribution câblé comprenant les étapes consistant à :
recevoir le trafic de diffusion commutée au niveau du multiplexeur de trafic associé à un premier niveau de bande passante ;
recevoir le trafic de données à grande vitesse au niveau du multiplexeur de trafic associé à un deuxième niveau de bande passante ;
recevoir le trafic de vidéo à la demande au niveau du multiplexeur de trafic associé à un troisième niveau de bande passante ;
multiplexer le trafic de diffusion numérique commutée, le trafic de données à grande vitesse et le trafic de vidéo à la demande au niveau du multiplexeur de trafic pour former le trafic multiplexé à des fins de transmission sur un réseau de distribution câblé ;
recevoir une indication d'une augmentation demandée dans la bande passante associée à l'un du groupe constitué du trafic de diffusion commutée, du trafic de données à grande vitesse et de trafic de vidéo à la demande ;
réaffecter l'au moins un des niveaux de bande passante associé au premier niveau de bande passante, au deuxième niveau de bande passante et au troisième niveau de bande passante associés respectivement à l'augmentation dans la bande passante ; et
multiplexer le trafic de diffusion numérique commutée, le trafic de données à grande vitesse et le trafic de vidéo à la demande au niveau du trafic conformément aux niveaux de bande passante réaffectés ;
**caractérisé en ce que** le procédé est effectué à un bord du réseau câblé, et le procédé comprend les étapes consistant à :
recevoir le trafic de publicité et les informations de contrôle de publicité associées ; et
insérer le trafic de publicité reçu dans le trafic de diffusion numérique commutée ou le trafic de vidéo à la demande selon les informations de contrôle de publicité associées.

9. Procédé selon la revendication 8, dans lequel le trafic affecté aux données à grande vitesse est supérieur à un niveau de seuil minimum.

10. Procédé selon la revendication 8, dans lequel l'indication d'une augmentation demandée dans la bande passante est basée sur l'analyse de demandes de signalisation des hôtes attachés au réseau câblé.

11. Procédé selon la revendication 8, comprenant en outre l'étape consistant à accéder à une base de données de règles pour déterminer si une augmentation proposée dans la bande passante à l'un du groupe constitué du premier niveau de bande passante, du deuxième niveau de bande passante et du troisième niveau de bande passante dépasse un niveau défini.

12. Procédé selon la revendication 8, comprenant l'étape consistant à : transmettre des informations de signalisation à au moins un hôte sur le réseau pour fournir une indication d'une réaffectation de bande passante pour un type de trafic.

13. Procédé selon la revendication 8, comprenant en outre l'étape consistant à : mettre à jour une table d'attribution de bande passante gérée dans une mémoire dans le multiplexeur de trafic.

14. Moyen lisible par ordinateur comprenant un logiciel pour exécuter tous les étapes du procédé selon l'une quelconque des revendications 8 à 13, lorsqu'il est exécuté sur un ordinateur.
